# EUROPEAN PATENT SPECIFICATION

(11) **EP 4 232 643 B1**
(45) Date of publication and mention of the grant of the patent: **19.11.2025**
(21) Application number: 20878545.1
(22) Date of filing: 21.10.2020
(51) Int. Cl.: E03D 5/00, E03C 1/126, E03B 1/04, E03B 7/08, F24D 17/00

(54) **A WATER TANK ARRANGEMENT AND A METHOD ARRANGED TO CIRCULATE WASTE WATER IN RESPONSE TO A PREDETERMINED TERMPERATURE**
WASSERTANKANORDNUNG UND VERFAHREN ZUM ZIRKULIEREN VON ABWASSER ALS REAKTION AUF EINE VORGEGEBENE TEMPERATUR
AGENCEMENT DE RÉSERVOIR D'EAU ET PROCÉDÉ CONÇU POUR FAIRE CIRCULER DE L'EAU USÉE EN RÉPONSE À UNE TEMPÉRATURE DÉTERMINÉE

(43) Date of publication of application: 30.08.2023
(73) Proprietor: E3 Equipment AB, 302 23 Halmstad (SE)
(72) Inventor: ENGLESSON, Per, 302 23 Halmstad (SE)
(74) Representative: Kransell & Wennborg KB
(86) International application number: PCT/SE2020/051012
(87) International publication number: WO 2021/080490

(56) References cited:
- EP-A2- 1 036 888
- WO-A1-2014/029992
- WO-A1-2014/029992
- CA-A1- 2 285 808
- CA-A1- 2 875 412
- KR-Y1- 200 321 167
- US-A- 5 498 330
- US-A1- 2012 125 443
- US-A1- 2013 180 928
- US-A1- 2013 180 928

## Description

### TECHNICAL FIELD

The present disclosure relates to a water tank arrangement, a bathroom arrangement and a method for controlling a water tank arrangement. The water tank arrangement is particularly applicable to be installed in bathrooms and connected to a toilet therein.

### BACKGROUND

Global increasing demand on improved living standard has resulted in a substantial increase in demand for fresh water. Not only is the requested demand directed to be able to have fresh drinking water but there is also an increased request to be able to use fresh water for other applications in the normal day by day living. In particular, a substantial amount of the utilized fresh water consumption is used for e.g. sanitary washing, toilet flushing and dishing. Thus, the primary use of fresh water is not for cooking and drinking.

An effect of the increased global warming in combination with the increased demand for fresh water is that the available amount of fresh water tends to be reduced. There is thus a desire provide for solutions that can reduce the water consumption.

One solution to reduce the water consumption in a facility is presented in KR 200321167. KR 200321167 describes a fresh water saving solution in which a water tank is connected to a reservoir of a toilet for supply of water thereto. The water is received into the tank from a tub.

Although KR 200321167 presents a solution for reducing the water consumption, it is still in need of further development in terms of e.g. sanitary aspects.

WO2014029992A1 discloses a system for transferring heat from greywater to a heat sink comprising a greywater reservoir having a first heat exchanger and a heat sink having a second heat exchanger, the first and second heat exchangers being configured for transfer therebetween of a heat transfer medium, and a pump for transferring the heat transfer medium between the first and second heat exchangers. The system is configured to cease operation of the pump before the power consumed by the pump exceeds the rate of heat transfer from the first to the second heat exchanger.

### SUMMARY

It is an object of the present disclosure to describe a water tank arrangement which at least partially overcomes the above described deficiencies. This is achieved by a water tank arrangement according to claim 1.

According to a first aspect, there is provided a water tank arrangement comprising a water tank connectable between an outlet of a water rinsing arrangement and a water cistern of a toilet, the water tank comprising an inlet portion connectable to the outlet of the water rinsing arrangement for receiving water from the water rinsing arrangement; and a first outlet portion connectable to the water cistern of the toilet; wherein the water tank arrangement further comprises a water temperature detecting device; a water circulation arrangement comprising a water pump for circulating the water in the water tank, wherein the water circulation arrangement comprises a circulation conduit extending between a first and a second portion of the water tank, the water pump being connected to the circulation conduit for directing water from the first portion towards the second portion; and a control unit connected to the water temperature detecting device and to the water pump, the control unit being configured to receive a signal from the water temperature detecting device, the signal being indicative of a temperature level or temperature distribution of the water within the water tank; compare the temperature level of the water with a predetermined temperature threshold limit, or compare the temperature distribution with a predetermined temperature deviation, and when the temperature level is above the predetermined temperature threshold limit or the temperature distribution is above the predetermined temperature deviation: control the water pump to circulate at least a portion of the water from the first portion to the second portion in the water tank.

The wording "water rinsing arrangement" should in the following and throughout the entire description be understood as an arrangement used for water wash/shower. Such a water rinsing arrangement may, for example be a shower, a bathtub, a handbasin, etc. The above described water tank may of course be connected to more than one water rinsing arrangement simultaneously, e.g. connected to a shower as well as to a bathtub for receiving "used" water therefrom.

The water temperature detecting device may, for example, be a temperature sensor positioned within the tank, such as below the water level in the tank. The water temperature detecting device may also be a temperature sensor arranged outside the tank in the vicinity of the tank, such as being connected to an external surface of the water tank for detecting a temperature level within the tank. Also, and as will be described in further detail below in the detailed description, the water temperature detecting device may comprise a plurality of water temperature sensors, preferably at least three water temperature sensors.

Furthermore, the control unit may include a microprocessor, microcontroller, programmable digital signal processor or another programmable device. The control unit may also, or instead, include an application specific integrated circuit, a programmable gate array or programmable array logic, a programmable logic device, or a digital signal processor. Where the control unit includes a programmable device such as the microprocessor, microcontroller or programmable digital signal processor mentioned above, the processor may further include computer executable code that controls operation of the programmable device.

An advantage is that the water in the tank will be kept at a desired temperature level which will minimize the risk of bacteria growth in the water tank. Particularly, a reduced risk of generating growth of legionella in the tank is provided since the water will, when its temperature level is above the predetermined limit, circulate which will reduce the water temperature to acceptable limits. Accordingly, since growth of legionella is most critical in stagnant water above a predetermined temperature level, the present disclosure reduces the risk of such bacterial growth. Such temperature level may, for example, be above 20 degrees Celsius.

The water pump is preferably operated until the temperature level of the water within the water tank is at a temperature level a few degrees below the predetermined temperature limit. According to a non-limiting example, the water pump is operated until the water temperature is below 17 degrees Celsius.

Further, in case of uneven temperature distribution within the tank, the water pump is arranged to circulate the water within the tank.

Accordingly, a temperature characteristic may be determined. The temperature characteristic may be the maximum temperature level in the tank and/or the temperature characteristic may be a temperature distribution within the tank. The temperature characteristic may thereafter be compared to a predetermined temperature characteristic threshold level. The predetermined temperature characteristic threshold level may be the predetermined temperature threshold limit when the temperature characteristic corresponds to the maximum temperature level in the tank. The predetermined temperature characteristic threshold level may be the predetermined temperature deviation when the temperature characteristic corresponds to the temperature distribution. The water pump is thus control when the temperature characteristic exceeds the predetermined temperature characteristic threshold level.

The circulation conduit may extend between the first and second portion within the tank, or may extend between the first and second portion outside the tank. Preferably, the first portion of the water tank may be arranged at a lower position within the tank compared to the second portion. Preferably, the first portion may be arranged in the vicinity of the tank bottom side, while the second portion is arranged at an upper level of the tank. The first and second portions may also be arranged on the surface of the water tank. As an alternative, at least one of the first and second portions may be connected to a portion of the tank via a cooling arrangement, or similar. The cooling arrangement will be described in further detail below. By arranging the circulation conduit between the first and second portions, water is circulating properly within the tank when operating the water pump. Further, the water pump may thus either be arranged within the water tank, below the water level, or outside the water tank, depending on the position of the extension of the circulation conduit.

According to an example embodiment, the water tank arrangement may further comprise a heat exchanger arrangement connected to the circulation conduit.

Preferably, the heat exchanger arrangement may be arranged in downstream fluid communication from the water pump as seen in the direction from the first portion towards the second portion of the tank.

By means of the heat exchanger arrangement, the water circulated in the circulation conduit can be cooled to a greater extent. Thus, the temperature level may be reduced more rapidly by the use of a heat exchanger arrangement connected to the circulation conduit.

According to an example embodiment, the water tank arrangement may further comprise an air fan arrangement, the air fan arrangement comprising an outlet facing the heat exchanger arrangement.

Hereby, the air fan arrangement will further reduce the temperature of the water directed through the heat exchanger arrangement. The air fan arrangement will also have the additional advantage of forcing the heat from the heat exchanger arrangement into the ambient environment. Thus, the air fan arrangement will additionally improve heating of the room at which the water tank arrangement is positioned, such as e.g. a bathroom, etc.

According to an example embodiment, the water tank arrangement may further comprise a water cooler arrangement arranged to reduce the temperature level of the water circulated in the circulation conduit. The water cooler arrangement may thus be arranged at any suitable position within the water tank arrangement for reducing the temperature level of the circulated water.

According to an example embodiment, the water cooler arrangement may be arranged in the circulation conduit between the first and second portions of the water tank.

The water cooler arrangement can thus even further reduce the temperature level of the water circulating in the circulating conduit. Further, heat generated by the water cooler arrangement can be directed into the ambient environment by means of the flow of air from the air fan arrangement.

According to an example embodiment, the water cooler arrangement may be arranged in downstream fluid communication with the heat exchanger as seen in the direction from the first portion towards the second portion of the tank.

According to an example embodiment, the water tank arrangement may further comprise a water ejector arrangement configured to controllably expel water to the water tank, wherein the control unit is further configured to: control the water pump to circulate at least a portion of the water in the water tank only when the water ejector is arranged in an inactive state.

The wording "inactive state" should be understood that the water ejector is not expelling water to the water tank arrangement. As the water, during e.g. showering, is above the predetermined temperature threshold limit, the water pump is not immediately activated during such showering, but instead controlled to circulate water after the water ejector is turned off. The water ejector arrangement may either expel water directly to the water tank, or expel water to the water tank via the water rinsing arrangement.

According to an example embodiment, the water tank arrangement may further comprise a water ejector arrangement configured to controllably expel water to the water tank, and a water level detecting device connected to the water rinsing arrangement, wherein the water ejector arrangement is arranged to expel water to the water rinsing arrangement when the water level detecting device indicates a water level below a predetermined threshold limit.

The water level detecting device may, for example, be a mechanical floating body or, as described below, a water level sensor. In the case of a floating body, the water ejector arrangement expels water when the floating body is below a predetermined water level in the water tank.

According to an example embodiment, the water ejector arrangement may be an electronically controlled water ejector arrangement, and the water level detecting device is a water level sensor connected to the electronically controlled water ejector arrangement, wherein the control unit is electrically connected to the electronically controlled water ejector and the water level sensor, the control unit being further configured to receive a signal from the water level sensor, the signal being indicative of the water level within the water tank; compare the water level with a predetermined threshold limit; and transmit a control signal to the electronically controlled water ejector arrangement for expel water to the water tank when the water level is below the predetermined threshold limit.

Hereby, water will at all times be available for provision to the water cistern to the toilet. Preferably, the control unit controls the electronically controlled water ejector to expel cold water into the water tank, which will reduce the usage of the water pump and other temperature reducing arrangements in the system.

According to a second aspect, there is provided a bathroom arrangement comprising a water rinsing arrangement comprising an outlet for expelling water therefrom, and a water tank arrangement according to any one of the embodiments described above in relation to the first aspect, the water tank arrangement comprising the water tank having the inlet portion connected to the outlet of the water rinsing arrangement.

Effects and features of the second aspect are largely analogous to those described above in relation to the first aspect.

According to a third aspect, there is provided a method for controlling a water tank arrangement, the water tank arrangement comprising a water tank connected between an outlet of a water rinsing arrangement and a water cistern of a toilet, the water tank comprising an inlet portion connected to the outlet of the water rinsing arrangement for receiving water from the water rinsing arrangement; and a first outlet portion connected to the water cistern of the toilet; wherein the water tank arrangement further comprises a water circulation arrangement comprising a water pump for circulating the water in the tank, wherein the water circulation arrangement comprises a circulation conduit extending between a first and a second portion of the water tank, the water pump being connected to the circulation conduit for directing water from the first portion towards the second portions; the method comprising the steps of determining a temperature level or temperature distribution of the water within the water tank; comparing the temperature level of the water with a predetermined temperature threshold limit, or compare the temperature distribution with a predetermined temperature deviation, and when the temperature level is above the predetermined temperature threshold limit or the temperature distribution is above the predetermined temperature deviation: controlling the water pump to circulate at least a portion of the water from the first portion to the second portion in the water tank.

Effects and features of the third aspect are largely analogous to those described above in relation to the first aspect.

Further features of, and advantages will become apparent when studying the appended claims and the following description.

### BRIEF DESCRIPTION OF THE DRAWINGS

The above, as well as additional objects, features and advantages, will be better understood through the following illustrative and non-limiting detailed description of exemplary embodiments, wherein:
Fig. 1 is a schematic illustration of a bathroom arrangement comprising water tank arrangement according to an example embodiment;
Fig. 2 is a schematic illustration of features incorporated in the water tank arrangement according to an example embodiment;
Fig. 3 is a schematic illustration of further features incorporated in the water tank arrangement according to an example embodiment; and
Fig. 4 is a flow chart of a method for controlling the water tank arrangement according to an example embodiment.

### DETAILED DESCRIPTION

The present disclosure will now be described more fully hereinafter with reference to the accompanying drawings, in which exemplary embodiments are shown. The disclosure may, however, be embodied in many different forms and should not be construed as limited to the embodiments set forth herein; rather, these embodiments are provided for thoroughness and completeness. Like reference character refer to like elements throughout the description.

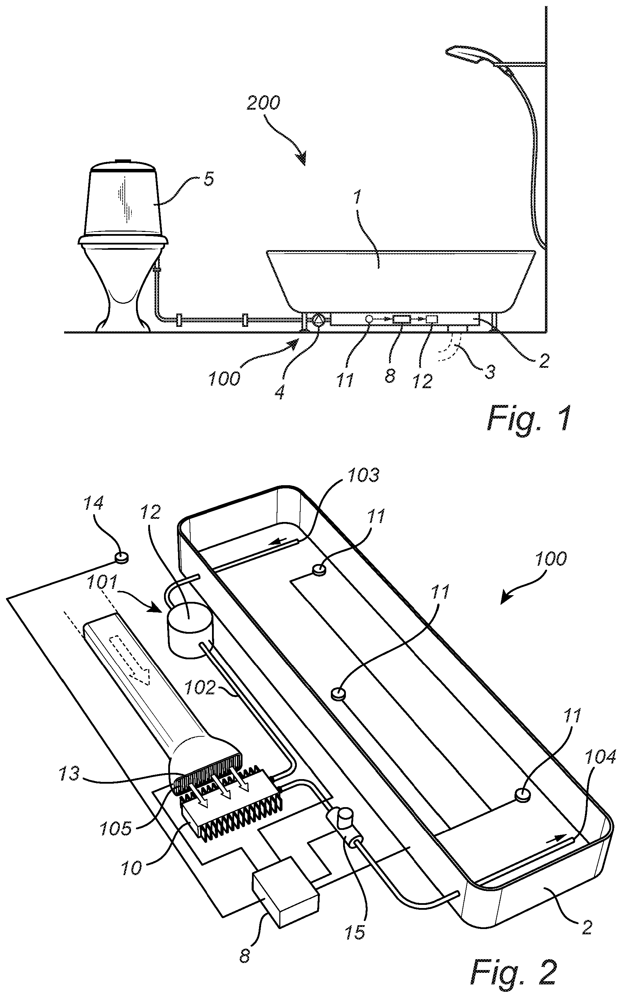

With particular reference to Fig. 1, there is depicted a bathroom arrangement 200 according to an example embodiment. The bathroom arrangement 200 in Fig. 1 comprises a water tank arrangement 100 according to an example embodiment. As can be seen in Fig. 1, the water tank arrangement 100 comprises a water tank 2, here arranged below a water rinsing arrangement 1 of the bathroom arrangement 200. In the depicted embodiment, the water rinsing arrangement 1 is a bathtub having a shower, thus a combined bath tub and shower. The water rinsing arrangement 1 may of course be a conventional shower arrangement or a handbasin, etc. The water tank 2 is thus connected to the water rinsing arrangement 1 and arranged to receive water therefrom when a person takes a shower or a bath.

As further depicted in Fig.1, the water tank arrangement 100 is further connected to a water cistern 5 of a toilet. Hereby, water present in the water tank 2 can be controllably directed to the water cistern 5 of the toilet. Preferably, the water tank arrangement 100 comprises a pump 4 arranged to pump the water from the tank 2 to the water cistern 5 of the toilet. The pump 4 is preferably a pressure-controlled pump which is arranged to be active to pump water when a pressure level in the conduit between the pump 4 and the water cistern 5 of the toilet falls below a predetermined pressure threshold limit. A pressure level in the conduit below this limit is an indication that the water cistern is capable of receiving water. According to a non-limiting example, the pressure level at which the pump initiates pumping of water to the water cistern 5 is approximately 1 bar (g).

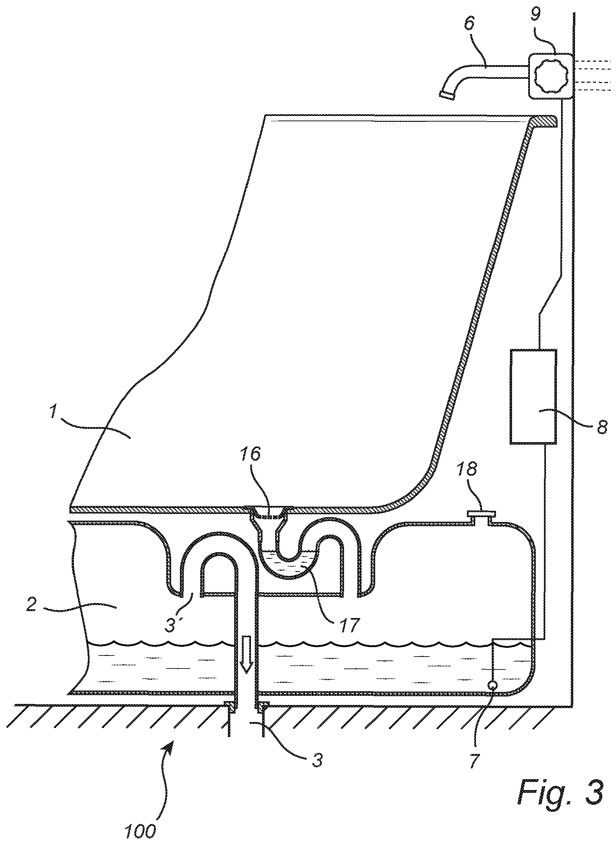

The water tank arrangement 100 further comprises an outlet 3 connected to the water tank 2. Hereby, in case the water tank 2 fills up before being able to supply water to the water cistern 5 of the toilet, the water can be drained to the outlet 3. Further details of the outlet 3 according to an example embodiment will be made in relation to the description of Fig. 3 below.

Moreover, the water tank arrangement 100 depicted in Fig. 1 also comprises a water circulation arrangement 101 comprising a water pump 12. The water circulation arrangement 101 is arranged to circulate the water present in the tank. The water tank arrangement 100 also comprises a water temperature detecting device 11 and a control unit 8 electrically connected to the water pump and the water temperature detecting device 11. The water temperature detecting device 11 may also in the following be referred to as a temperature sensor or water temperature sensor. In particular, the control unit 8 is arranged to receive a signal from the temperature sensor 11 which signal is indicative of a water temperature level of the water in the water tank 2. The signal may also be indicative of a temperature distribution within the tank, thus the temperature of the water at different positions within the water tank 2. The control unit 8 is also arranged to transmit a control signal to the water pump 12 for operation of the water pump 12.

The water tank arrangement 100 according to the embodiment depicted in Fig. 1 is advantageous as it can supply "used" water to the water cistern 5 of the toilet, such that the water can be re-used for flushing the toilet. Also, the control unit 8 is arranged to keep track of the temperature level of the water in the tank 2. When the water exceeds a predetermined temperature threshold limit, such as e.g. 20 degrees Celsius, the control unit transmits a control signal to the water pump 12 for circulating the water in the water tank 2. When the water is circulated, the temperature level will be reduced and, in conjunction with the non-stagnant water, thereby reducing the risk of e.g. legionella growth in the water. Further, if the control unit 8 receives a signal indicative of an uneven temperature distribution within the water tank 2, although the temperature level is below the predetermined temperature threshold limit, the water pump 12 can circulate the water to provide an even temperature distribution within the water tank 12.

Turning now to Fig. 2 which illustrates the water tank arrangement 100 according to an example embodiment. As can be seen, the water tank arrangement 100 comprises, in addition to the embodiment depicted in Fig. 1, a water circulation conduit 102 arranged between a first 103 and a second 104 portion of the water tank 2. According to the embodiment depicted in Fig. 2, the water circulation conduit 102 is directed out from the tank 2. Hence, the conduit is partially positioned outside the tank 2. As also depicted in Fig. 2, the water pump 12 is arranged in connection to the water circulation conduit 102, preferably at, but not limited to, a position outside the water tank 2. Hereby, the water pump 12 is arranged to circulate water out from an inlet of the water circulation conduit 102 at the first portion 103 and into an outlet of the water circulation conduit 102 at the second portion 104.

Moreover, the water tank arrangement 100 comprises a heat exchanger arrangement 10 connected to the water circulation conduit 102. Preferably, the heat exchanger arrangement 10 is connected to the water circulation conduit 102 at a position downstream the water pump 12. As also depicted, the water tank arrangement 100 comprises an air fan arrangement 13 positioned in the vicinity of the heat exchanger arrangement 10 and arranged to controllably supply flow of air towards the heat exchanger arrangement 10, thus further cooling the water circulating through the heat exchanger arrangement 10.

Moreover, the water tank arrangement 100 in Fig. 2 also comprises a water cooler arrangement 15 positioned in the water circulation conduit 102 at a position downstream the heat exchanger arrangement 10 as seen in the direction from the first portion 103 towards the second portion 104. Although the water cooler arrangement 15 is depicted as positioned in the water circulation conduit 102, it may also be arranged at other positions within the water tank arrangement 100 as long as fulfilling the purpose of properly reducing the temperature level of the circulating water.

Still further, the embodiment depicted in Fig. 2 comprises a plurality of water temperature detecting devices 11, in the embodiment depicted as three water temperature detecting devices 11. By using a plurality of water temperature detecting devices 11 the water temperature at different positions within the water tank 2 can be measured. The pump 12 can thus be controlled to circulate water as described above if one of the water temperature detecting devices 11 indicates a temperature level above the predetermined temperature threshold limit. In addition, the pump 12 can also be controlled to circulate water if a difference in temperature level between the water temperature detecting devices 11 is above a predetermined temperature deviation limit. The predetermined temperature deviation limit is thus a delta threshold value of the temperature at different positions within the water tank 2. Alternatively, a mean value of the measured temperature can be determined, whereby the water pump is controlled to circulate the water if the mean temperature value is above the predetermined temperature threshold limit. As an example, if only one of the water temperature detecting devices 11 indicates a temperature level above the predetermined temperature threshold limit, the pump can be operated to circulate the water to provide a more even temperature distribution in the tank 2.

The water tank arrangement 100 also comprises a temperature sensor 14 for measuring the ambient temperature outside the water tank 2.

As can be seen, the control unit 8 is connected to water pump 12, the water temperature detecting devices 11, the air fan arrangement 13, the water cooler arrangement 15 as well as to the temperature sensor 14 positioned outside the water tank 2.

During operation, the control unit 8 receives a signal from at least one of the water temperature detecting devices 11, or a mean value of the temperature level determined by the water temperature detecting devices 11, which signal is indicative of the temperature level of the water contained in the water tank 2. If the temperature level is above the predetermined temperature threshold limit, the control unit 8 transmits a control signal to the water pump 12 for initiating the water pump to circulate the water in the water tank 2 through the water circulation conduit 102. The water is directed through the heat exchanger 10 for further reducing its temperature. The control unit 8 can also transmit a control signal to the air fan arrangement 13 such that the air fan arrangement 13 can supply a flow of air towards the heat exchanger 10 for further cooling of the water in the heat exchanger 10. The air fan arrangement 13 preferably receives air from a position close to the floor, where the temperature is as low as possible.

The control unit 8 can also control the water cooler arrangement 15 for further cooling of the water. The control unit also receives a signal from the temperature sensor 14 positioned outside the water tank 2. According to an example, the water cooler arrangement 15 is preferably activated if the temperature level detected by the externally positioned sensor 14 indicates a temperature level above the predetermined temperature threshold limit. The heat generated by the water cooler arrangement 15 during operation thereof can be supplied to the ambient environment by means of supplying an air flow from the air fan arrangement 13 towards the water cooler arrangement 15.

The water tank 2 is preferably thermally isolated by means of a suitable isolating material. Hereby, the water in the tank 2 is substantially prevented from being heated by the ambient temperature in the room, or at least to reduce the heat rate of the water in the water tank 2.

Turning now to Fig. 3 which illustrates further details of the water tank arrangement 100 according to an example embodiment. As can be seen, the water tank arrangement 100 further comprises a water level sensor 7 and an electronically controlled water ejector arrangement 9 electrically connected to the control unit 8. Hereby, the control unit receives a signal from the water level sensor 7 indicative of the water level in the water tank 2. If the water level is below a predetermined water level limit, the control unit 8 transmits a control signal to the electronically controlled water ejector arrangement 9 for controlling the electronically controlled water ejector arrangement 9 to expel water, preferably cold water, out from an outlet 6 into the water rinsing arrangement 1. The water expelled to the water rinsing arrangement 1 will be directed into the water tank 2 through an outlet 16 of the water rinsing arrangement 1. The outlet 16 of the water rinsing arrangement 1 is preferably provided with a filter for reducing the risk of receiving dirt into the water tank. The water tank 2 also comprises a water seal 17 for preventing odor from being provided from the water tank 2 into the water rinsing arrangement.

Although Fig. 3 depicts an electronically controlled water ejector arrangement 9 and a water level sensor 7, the essence of this embodiment may however also be accomplished by means of a water level detecting device in the form of a floating body and a mechanically controlled water ejector arrangement which expels water when the floating body falls below the predetermined threshold level within the tank.

As further depicted in Fig. 3, the water tank 2 comprises an outlet 3 as also indicate above. The outlet 3 comprises a U-shaped portion with an inlet 3' facing the water surface of the water in the water tank 2. When the water level rises within the water tank 2, the water will be expelled through the U-shaped portion via the inlet 3' and further out to the drain. The water tank 2 will thus be automatically drained.

The water tank 2 is also provided with an additional inlet 18 for connection to a second water rinsing arrangement, such as being connected to a water basin, etc.

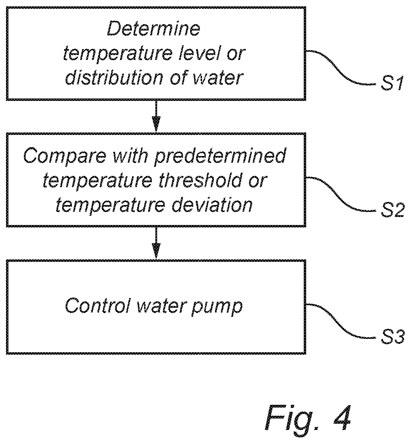

In order to sum up, reference is made to Fig. 4 which illustrates a flow chart of a method for operating the water tank arrangement described above.

When the water tank arrangement 100 is installed and connected to a water cistern 5 of a toilet and to the outlet 16 of water rinsing arrangement 1, a temperature level or temperature distribution of the water in the water tank 2 is determined S1. The temperature level is compared S2 with a predetermined temperature threshold limit and the temperature distribution is compared with a predetermined temperature deviation. When the temperature level is above the predetermined temperature threshold limit or the temperature distribution is above the predetermined temperature deviation, the water pump 12 is controlled S3 to circulate the water in the water tank 2.

Preferably, the pump is active to circulate the water until the water temperature is well below the predetermined temperature threshold limit, or the temperature distribution is within acceptable limits. As a non-limiting example, the water pump 12 can be controlled to circulate the water when the temperature level of the water in the water tank 2 exceeds 20 degrees Celsius, and deactivated when the temperature level of the water has been reduced to 16 - 17 degrees Celsius. With regards to the temperature distribution, the difference between the lowest and highest temperature within the water tank should preferably not exceed 10 degrees Celsius, more preferably not exceed 5 degrees Celsius, although other temperature deviation limits are conceivable.

It is to be understood that the present disclosure is not limited to the embodiments described above and illustrated in the drawings; rather, the skilled person will recognize that many changes and modifications may be made within the scope of the appended claims.

## Claims

1. A water tank arrangement (100) comprising a water tank (2) connectable between an outlet of a water rinsing arrangement (1) and a water cistern (5) of a toilet, the water tank (2) comprising an inlet portion connectable to the outlet of the water rinsing arrangement (1) for receiving water from the water rinsing arrangement; and a first outlet portion connectable to the water cistern (5) of the toilet; wherein the water tank arrangement (100) further comprises a water temperature detecting device (11); a water circulation arrangement (101) comprising a water pump (12) for circulating the water in the water tank (2), wherein the water circulation arrangement (101) comprises a circulation conduit (102) extending between a first (103) and a second (104) portion of the water tank, the water pump being connected to the circulation conduit for directing water from the first portion towards the second portion; and a control unit (8) connected to the water temperature detecting device (11) and to the water pump (12), the control unit being configured to:
- receive a signal from the water temperature detecting device (11), the signal being indicative of a temperature level or a temperature distribution of the water within the water tank;
- compare the temperature level of the water with a predetermined temperature threshold limit, or compare the temperature distribution with a predetermined temperature deviation, and when the temperature level is above the predetermined temperature threshold limit or the temperature distribution is above the predetermined temperature deviation:
- control the water pump (12) to circulate at least a portion of the water from the first portion to the second portion in the water tank.

2. The water tank arrangement according to claim 1, wherein the water tank arrangement further comprises a heat exchanger arrangement (10) connected to the circulation conduit (102).

3. The water tank arrangement according to claim 2, wherein the water tank arrangement further comprises an air fan arrangement (13), the air fan arrangement comprising an outlet (105) facing the heat exchanger arrangement.

4. The water tank arrangement according to any one of the preceding claims, wherein the water tank arrangement further comprises a water cooler arrangement (15) arranged to reduce the temperature level of the water circulated in the circulation conduit.

5. The water tank arrangement according to claim 4, wherein the water cooler arrangement (15) is arranged in the circulation conduit between the first and second portions of the water tank.

6. The water tank arrangement according to any one of claims 4 and 5, when dependent on any one of claims 2 - 3, wherein the water cooler arrangement is arranged in downstream fluid communication with the heat exchanger as seen in the direction from the first portion towards the second portion of the tank.

7. The water tank arrangement according to any one of the preceding claims, wherein the water tank arrangement further comprises a water ejector arrangement (9) configured to controllably expel water to the water tank, wherein the control unit is further configured to:
- control the water pump (12) to circulate at least a portion of the water in the water tank only when the water ejector is arranged in an inactive state.

8. The water tank arrangement according to any one of the preceding claims, wherein the water tank arrangement further comprises a water ejector arrangement (9) configured to controllably expel water to the water tank, and a water level detecting device connected to the water ejector arrangement, wherein the water ejector arrangement is arranged to expel water to the water tank when the water level detecting device indicates a water level below a predetermined threshold limit.

9. The water tank arrangement according to claim 8, wherein the water ejector arrangement (9) is an electronically controlled water ejector arrangement (9), and the water level detecting device is a water level sensor connected to the electronically controlled water ejector arrangement (9), wherein the control unit is electrically connected to the electronically controlled water ejector and the water level sensor, the control unit being further configured to:
- receive a signal from the water level sensor, the signal being indicative of the water level within the water tank;
- compare the water level with a predetermined threshold limit; and
- transmit a control signal to the electronically controlled water ejector arrangement (9) for expel water to the water tank when the water level is below the predetermined threshold limit.

10. A bathroom arrangement (200) comprising a water rinsing arrangement comprising an outlet for expelling water therefrom, and a water tank arrangement according to any one of the preceding claims, the water tank arrangement comprising the water tank having the inlet portion connected to the outlet of the water rinsing arrangement.

11. A method for controlling a water tank arrangement, the water tank arrangement comprising a water tank connected between an outlet of a water rinsing arrangement and a water cistern of a toilet, the water tank comprising an inlet portion connected to the outlet of the water rinsing arrangement for receiving water from the water rinsing arrangement; and a first outlet portion connected to the water cistern of the toilet; wherein the water tank arrangement further comprises a water circulation arrangement comprising a water pump for circulating the water in the tank, wherein the water circulation arrangement (101) comprises a circulation conduit (102) extending between a first (103) and a second (104) portion of the water tank, the water pump being connected to the circulation conduit for directing water from the first portion towards the second portions; the method comprising the steps of:
- determining (S1) a temperature level or temperature distribution of the water within the water tank;
- comparing (S2) the temperature level of the water with a predetermined temperature threshold limit, or compare the temperature distribution with a predetermined temperature deviation, and when the temperature level is above the predetermined temperature threshold limit or the temperature distribution is above the predetermined temperature deviation:
- controlling (S3) the water pump to circulate at least a portion of the water from the first portion to the second portion in the water tank.

## Patentansprüche

1. Wassertankanordnung (100), die einen Wassertank (2), der zwischen einem Auslass einer Wasserspülanordnung (1) und einem Wasserkasten (5) einer Toilette angeschlossen werden kann, aufweist, wobei der Wassertank (2) einen Einlassabschnitt, der mit dem Auslass der Wasserspülanordnung (1) zum Aufnehmen von Wasser von der Wasserspülanordnung verbunden werden kann; und einen ersten Auslassabschnitt, der mit dem Wasserkasten (5) der Toilette verbunden werden kann, aufweist; wobei die Wassertankanordnung (100) ferner eine Wassertemperaturmessvorrichtung (11); eine Wasserzirkulationsanordnung (101), die eine Wasserpumpe (12) zum Zirkulieren des Wassers in dem Wassertank (2) aufweist, wobei die Wasserzirkulationsanordnung (101) eine Zirkulationsleitung (102), die sich zwischen einem ersten (103) und einem zweiten (104) Abschnitt des Wassertanks erstreckt, aufweist, wobei die Wasserpumpe mit der Zirkulationsleitung verbunden ist, um Wasser aus dem ersten Abschnitt zu dem zweiten Abschnitt zu leiten; und eine Steuereinheit (8), die mit der Wassertemperaturmessvorrichtung (11) und der Wasserpumpe (12) verbunden ist, aufweist, wobei die Steuereinheit dazu ausgelegt ist:
- ein Signal von der Wassertemperaturmessvorrichtung (11) zu empfangen, wobei das Signal ein Temperaturniveau oder eine Temperaturverteilung des Wassers innerhalb des Wassertanks angibt;
- das Temperaturniveau des Wassers mit einer vorbestimmten Temperaturschwellenwertgrenze zu vergleichen oder die Temperaturverteilung mit einer vorbestimmten Temperaturabweichung zu vergleichen, und wenn das Temperaturniveau über der vorbestimmten Temperaturschwellenwertgrenze liegt oder die Temperaturverteilung die vorbestimmte Temperaturabweichung überschreitet:
- die Wasserpumpe (12) zum Zirkulieren mindestens eines Teils des Wassers von dem ersten Abschnitt zu dem zweiten Abschnitt in dem Wassertank zu steuern.

2. Wassertankanordnung nach Anspruch 1, wobei die Wassertankanordnung ferner eine Wärmetauscheranordnung (10) aufweist, die mit der Zirkulationsleitung (102) verbunden ist.

3. Wassertankanordnung nach Anspruch 2, wobei die Wassertankanordnung ferner eine Luftabzugsanordnung (13) aufweist, wobei die Luftabzugsanordnung einen Auslass (105), der der Wärmetauscheranordnung zugewandt ist, aufweist.

4. Wassertankanordnung nach einem der vorhergehenden Ansprüche, wobei die Wassertankanordnung ferner eine Wasserkühlungsanordnung (15) aufweist, die zum Reduzieren des Temperaturniveaus des Wassers, das in der Zirkulationsleitung zirkuliert, angeordnet ist.

5. Wassertankanordnung nach Anspruch 4, wobei die Wasserkühlungsanordnung (15) in der Zirkulationsleitung zwischen dem ersten und zweiten Abschnitt des Wassertanks angeordnet ist.

6. Wassertankanordnung nach einem der Ansprüche 4 und 5, in Abhängigkeit von einem der Ansprüche 2 bis 3, wobei die Wasserkühlungsanordnung aus der Sicht in Richtung von dem ersten Abschnitt zu dem zweiten Abschnitt des Tanks in Fluidkommunikation stromabwärts mit dem Wärmetauscher angeordnet ist.

7. Wassertankanordnung nach einem der vorhergehenden Ansprüche, wobei die Wassertankanordnung ferner eine Wasserausstoßanordnung (9) aufweist, die dazu ausgelegt ist, Wasser kontrollierbar in den Wassertank auszustoßen, wobei die Steuereinheit ferner dazu ausgelegt ist:
- die Wasserpumpe (12) zum Zirkulieren mindestens eines Teils des Wassers in dem Wassertank zu steuern, nur wenn der Wasserausstoßer in einem inaktiven Zustand angeordnet ist.

8. Wassertankanordnung nach einem der vorhergehenden Ansprüche, wobei die Wassertankanordnung ferner eine Wasserausstoßanordnung (9), die dazu ausgelegt ist, Wasser kontrollierbar zu dem Wassertank auszustoßen, und eine Wasserpegelmessvorrichtung, die mit der Wasserausstoßanordnung verbunden ist, aufweist, wobei die Wasserausstoßanordnung dazu angeordnet ist, Wasser zu dem Wassertank auszustoßen, wenn die Wasserpegelmessvorrichtung einen Wasserpegel unter einer vorbestimmten Schwellenwertgrenze angibt.

9. Wassertankanordnung nach Anspruch 8, wobei die Wasserausstoßanordnung (9) eine elektronisch gesteuerte Wasserausstoßanordnung (9) ist und die Wasserpegelmessvorrichtung ein Wasserpegelsensor ist, der mit der elektronisch gesteuerten Wasserausstoßanordnung (9) verbunden ist, wobei die Steuereinheit elektrisch mit dem elektronisch gesteuerten Wasserausstoßer und dem Wasserpegelsensor verbunden ist, wobei die Steuereinheit ferner dazu ausgelegt ist:
- ein Signal von dem Wasserpegelsensor zu empfangen, wobei das Signal den Wasserpegel innerhalb des Wassertanks angibt;
- den Wasserpegel mit einer vorbestimmten Schwellenwertgrenze zu vergleichen; und
- ein Steuersignal an die elektronisch gesteuerte Wasserausstoßanordnung (9) zum Ausstoßen von Wasser zu dem Wassertank zu übertragen, wenn der Wasserpegel unter der vorbestimmten Schwellenwertgrenzte liegt.

10. Badezimmeranordnung (200), die eine Wasserspülanordnung aufweist, die einen Auslass zum Ausstoßen von Wasser davon und eine Wassertankanordnung gemäß einem der vorhergehenden Ansprüche aufweist, wobei die Wassertankanordnung den Wassertank aufweist, dessen Einlassabschnitt mit dem Auslass der Wasserspülanordnung verbunden ist.

11. Verfahren zum Steuern einer Wassertankanordnung, wobei die Wassertankanordnung einen Wassertank aufweist, der zwischen einem Auslass einer Wasserspülanordnung und einem Wasserkasten einer Toilette angeschlossen ist, wobei der Wassertank einen Einlassabschnitt, der mit dem Auslass der Wasserspülanordnung zum Aufnehmen von Wasser aus der Wasserspülanordnung verbunden ist; und einen ersten Auslassabschnitt, der mit dem Wasserkasten der Toilette verbunden ist, aufweist; wobei die Wassertankanordnung ferner eine Wasserzirkulationsanordnung aufweist, die eine Wasserpumpe zum Zirkulieren des Wassers in dem Tank aufweist, wobei die Wasserzirkulationsanordnung (101) eine Zirkulationsleitung (102) aufweist, die sich zwischen einem ersten (103) und einem zweiten (104) Abschnitt des Wassertanks erstreckt, wobei die Wasserpumpe mit der Zirkulationsleitung zum Leiten von Wasser von dem ersten Abschnitt zu dem zweiten Abschnitt verbunden ist; wobei das Verfahren die folgenden Schritte umfasst:
- Bestimmen (S1) eines Temperaturniveaus oder einer Temperaturverteilung des Wassers in dem Wassertank;
- Vergleichen (S2) des Temperaturniveaus des Wassers mit einer vorbestimmten Temperaturschwellenwertgrenze bzw. Vergleichen der Temperaturverteilung mit einer vorbestimmten Temperaturabweichung, und wenn das Temperaturniveau über der vorbestimmten Temperaturschwellenwertgrenze liegt bzw. die Temperaturverteilung die vorbestimmte Temperaturabweichung überschreitet:
- Steuern (S3) der Wasserpumpe zum Zirkulieren mindestens eines Teils des Wassers von dem ersten Abschnitt zu dem zweiten Abschnitt in dem Wassertank.

## Revendications

1. Agencement de réservoir d'eau (100) comprenant un réservoir d'eau (2) connectable entre une sortie d'un agencement de rinçage à l'eau (1) et une citerne d'eau (5) de toilettes, le réservoir d'eau (2) comprenant une portion d'entrée connectable à la sortie de l'agencement de rinçage à l'eau (1) pour recevoir de l'eau provenant de l'agencement de rinçage à l'eau ; et une première portion de sortie connectable à la citerne d'eau (5) des toilettes ; dans lequel l'agencement de réservoir d'eau (100) comprend en outre un dispositif de détection de température d'eau (11) ; un agencement de circulation d'eau (101) comprenant une pompe à eau (12) pour faire circuler l'eau dans le réservoir d'eau (2), dans lequel l'agencement de circulation d'eau (101) comprend un conduit de circulation (102) qui s'étend entre une première portion (103) et une deuxième portion (104) du réservoir d'eau, la pompe à eau étant connectée au conduit de circulation pour diriger l'eau de la première portion vers la deuxième portion ; et une unité de commande (8) connectée au dispositif de détection de température d'eau (11) et à la pompe à eau (12), l'unité de commande étant configurée pour :
- recevoir un signal provenant du dispositif de détection de température d'eau (11), le signal étant indicatif d'un niveau de température ou d'une distribution de température de l'eau dans le réservoir d'eau ;
- comparer le niveau de température de l'eau à un seuil de température limite prédéterminé, ou comparer la distribution de température à un écart de température prédéterminé, et quand le niveau de température est supérieur au seuil de température limite prédéterminé ou que la distribution de température est supérieure à l'écart de température prédéterminé :
- commander la pompe à eau (12) pour faire circuler au moins une portion de l'eau de la première portion vers la deuxième portion dans le réservoir d'eau.

2. Agencement de réservoir d'eau selon la revendication 1, dans lequel l'agencement de réservoir d'eau comprend en outre un agencement d'échangeur de chaleur (10) connecté au conduit de circulation (102).

3. Agencement de réservoir d'eau selon la revendication 2, dans lequel l'agencement de réservoir d'eau comprend en outre un agencement de ventilateur d'air (13), l'agencement de ventilateur d'air comprenant une sortie (105) faisant face à l'agencement d'échangeur de chaleur.

4. Agencement de réservoir d'eau selon l'une quelconque des revendications précédentes, dans lequel l'agencement de réservoir d'eau comprend en outre un agencement de refroidisseur d'eau (15) agencé pour réduire le niveau de température de l'eau circulant dans le conduit de circulation.

5. Agencement de réservoir d'eau selon la revendication 4, dans lequel l'agencement de refroidisseur d'eau (15) est agencé dans le conduit de circulation entre les première et deuxième portions du réservoir d'eau.

6. Agencement de réservoir d'eau selon l'une quelconque des revendications 4 et 5, quand elles dépendent de l'une quelconque des revendications 2 et 3, dans lequel l'agencement de refroidisseur d'eau est agencé en communication fluidique en aval avec l'échangeur de chaleur, vu dans la direction allant de la première portion vers la deuxième portion du réservoir.

7. Agencement de réservoir d'eau selon l'une quelconque des revendications précédentes, dans lequel l'agencement de réservoir d'eau comprend en outre un agencement d'éjecteur d'eau (9) configuré pour expulser l'eau de manière contrôlable vers le réservoir d'eau, dans lequel l'unité de commande est en outre configurée pour :
- commander la pompe à eau (12) pour faire circuler au moins une portion de l'eau dans le réservoir d'eau uniquement quand l'éjecteur d'eau est agencé dans un état inactif.

8. Agencement de réservoir d'eau selon l'une quelconque des revendications précédentes, dans lequel l'agencement de réservoir d'eau comprend en outre un agencement d'éjecteur d'eau (9) configuré pour expulser de l'eau de manière contrôlable vers le réservoir d'eau, et un dispositif de détection de niveau d'eau connecté à l'agencement d'éjecteur d'eau, dans lequel l'agencement d'éjecteur d'eau est agencé pour expulser de l'eau vers le réservoir d'eau quand le dispositif de détection de niveau d'eau indique un niveau d'eau inférieur à un seuil limite prédéterminé.

9. Agencement de réservoir d'eau selon la revendication 8, dans lequel l'agencement d'éjecteur d'eau (9) est un agencement d'éjecteur d'eau à commande électronique (9), et le dispositif de détection de niveau d'eau est un capteur de niveau d'eau connecté à l'agencement d'éjecteur d'eau à commande électronique (9), dans lequel l'unité de commande est connectée électriquement à l'éjecteur d'eau à commande électronique et au capteur de niveau d'eau, l'unité de commande étant en outre configurée pour :
- recevoir un signal provenant du capteur de niveau d'eau, le signal étant indicatif du niveau d'eau dans le réservoir d'eau ;
- comparer le niveau d'eau à un seuil limite prédéterminé ; et
- transmettre un signal de commande à l'agencement d'éjecteur d'eau à commande électronique (9) pour expulser de l'eau vers le réservoir d'eau quand le niveau d'eau est inférieur au seuil limite prédéterminé.

10. Agencement de salle de bains (200) comprenant un agencement de rinçage à l'eau comportant une sortie pour expulser de l'eau de celui-ci, et un agencement de réservoir d'eau selon l'une quelconque des revendications précédentes, l'agencement de réservoir d'eau comportant, sur le réservoir d'eau, une connexion de la portion d'entrée à la sortie de l'agencement de rinçage à l'eau.

11. Procédé de commande d'un agencement de réservoir d'eau, l'agencement de réservoir d'eau comprenant un réservoir d'eau connecté entre une sortie d'un agencement de rinçage à l'eau et une citerne d'eau de toilettes, le réservoir d'eau comprenant une portion d'entrée connectée à la sortie de l'agencement de rinçage à l'eau pour recevoir de l'eau provenant du dispositif de rinçage à l'eau ; et une première portion de sortie connectée à la citerne d'eau des toilettes ; dans lequel l'agencement de réservoir d'eau comprend en outre un agencement de circulation d'eau comprenant une pompe à eau pour faire circuler l'eau dans le réservoir, dans lequel l'agencement de circulation d'eau (101) comprend un conduit de circulation (102) qui s'étend entre une première portion (103) et une deuxième portion (104) du réservoir d'eau, la pompe à eau étant connectée au conduit de circulation pour diriger l'eau de la première portion vers les deuxièmes portions ; le procédé comprenant les étapes suivantes :
- détermination (S1) d'un niveau de température ou d'une distribution de température de l'eau dans le réservoir d'eau ;
- comparaison (S2) du niveau de température de l'eau à un seuil de température limite prédéterminé, ou comparaison de la distribution de température à un écart de température prédéterminé, et quand le niveau de température est supérieur au seuil de température limite prédéterminé ou que la distribution de température est supérieure à l'écart de température prédéterminé :
- commande (S3) de la pompe à eau pour faire circuler au moins une partie de l'eau de la première portion à la deuxième portion dans le réservoir d'eau.
